# EUROPÄISCHE PATENTSCHRIFT

(11) **EP 0 573 755 B1**
(45) Veröffentlichungstag und Bekanntmachung des Hinweises auf die Patenterteilung: **19.06.1996**
(21) Anmeldenummer: 93105864.8
(22) Anmeldetag: 08.04.1993
(51) Int. Cl.: F16L 3/00, F16L 59/14, F24D 3/14

(54) **Dämmsystem**
Insulation system
Système isolant

(30) Priorität: 12.06.1992 DE 4219305
(43) Veröffentlichungstag der Anmeldung: 15.12.1993
(73) Patentinhaber: E. Missel GmbH, D-70374 Stuttgart (DE)
(72) Erfinder: Schäfer, Wolfgang, W-7000 Stuttgart 50 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 010 639
- EP-A- 0 158 188
- EP-A- 0 426 539
- WO-A-91/10866
- CH-A- 596 517
- DE-U- 8 904 093

## Beschreibung

Die Erfindung betrifft ein Dämmsystem für auf Rohbetondecken in einer Wärme- und Trittschalldämmung zu verlegende, insbesondere Warmwasser führende Rohrleitungen mit einer die Rohrleitung umschließenden flexiblen Hülle und zumindest einer zwischen Rohrleitung und Hülle angeordneten, im Querschnitt zumindest im wesentlichen rechteckförmigen Dämmstoffschicht aus flexiblem Material, insbesondere Schaumstoff, wobei die in ihrer Breite etwa dem Rohraußendurchmesser entsprechende Dämmstoffschicht bezogen auf die Rohbetondecke unterhalb des Rohres gelegen ist und der aus Hülle, Dämmstoffschicht und Rohr bestehende Aufbau im wesentlichen ebene Anschlußflächen aufweist, an die im verlegten Zustand die Wärme- und Trittschalldämmung seitlich angrenzt.

Der typische Fußbodenaufbau in Gebäuden besteht aus einer auf der Rohbetondecke verlegten Wärmedämmung mit einer darüber angeordneten Trittschalldämmungsschicht, auf der der Estrich aufgebracht wird, welcher dann als Träger des jeweiligen Oberbodenbelags dient.

Die ordnungsgemäße Herstellung eines derartigen Bodenaufbaus bereitet dann keine Schwierigkeiten, wenn die Wärme- und Trittschalldämmung großflächig und ohne Unterbrechungen verlegt werden kann. Müssen aber in den Fußbodenaufbau, wie dies sehr häufig der Fall ist, vorschriftsmäßig gedämmte Rohrleitungen integriert werden, dann führt dies nicht nur zu einem erhöhten Arbeits-Mehraufwand, sondern auch dazu, daß sich störende Ungleichmäßigkeiten im Aufbau ergeben, die einerseits unter dämmtechnischen Gesichtspunkten nachteilig sind, und andererseits Ausgleichsschüttungen mittels kleinteiligen Dämmaterials vorgenommen werden müssen, um anschließend den Estrich korrekt aufbringen zu können.

Aus der EP-A-0 158 188 ist ein Dämmaterial für Rohrleitungen bekannt, das aus einer Dämmschicht und einer die Rohrleitung umfassenden Hülle besteht, wobei die Dämmschicht bezüglich des zu isolierenden Rohres asymmetrisch angeordnet ist. Mit einem solchen Dämmaterial werden Wärmeverluste zur Rohbetondecke hin durch die Dämmschicht verhindert und seitlich und nach oben hin wird die sich anschließende Wärme- und Trittschalldämmung des Estrichs ausgenutzt. Dadurch ergibt sich eine geringe Bauhöhe, die es ermöglicht, das einwandfrei gedämmte Rohr in der Trittschalldämmung unterhalb des Estrichs unterzubringen und in vorteilhafter Weise die Umhüllung des Rohres in den seitlichen Bereichen und im oberen Bereich mit solcher Festigkeit auszubilden, daß Beschädigungsgefahren weitestgehend ausgeschlossen sind. Weiterhin wird durch diese Ausgestaltung teurer Dämmstoff eingespart, da der hochwertige Wärmedämmstoff nur zwischen Rohr und Rohbetondecke vorgesehen werden muß.

Auch bei dem Dämmaterial nach der EP-A-0 158 188 stellt sich weiterhin das Problem, daß Ausgleichsschüttungen mittels kleinteiligen Dämmaterials vorgenommen werden müssen, um eine gleichmäßige Oberfläche des Unterbaus zu erhalten, wenn das Dämmaterial eine Bauhöhe besitzt, die kleiner als die Höhe der Wärme- und Trittschalldämmung ist, in der das Dämmaterial verlegt werden soll. Erst nach Aufbringen der Ausgleichsschüttungen kann der Estrich korrekt aufgebracht werden.

Aufgabe der Erfindung ist es, ein Dämmsystem zu schaffen, das die bisherigen Nachteile beim Aufbau von Böden, in denen Rohrleitungen verlegt werden müssen, beseitigt und demgemäß einerseits für den Fußbodenbauer wesentliche Erleichterungen bringt und andererseits in dämmtechnischer Hinsicht Vorteile zur Folge hat.

Gelöst wird diese Aufgabe nach der Erfindung ausgehend von den Merkmalen des Oberbegriffs des Anspruchs 1 dadurch, daß der aus Hülle, Dämmstoffschicht und Rohr bestehende Aufbau zum Höhenausgleich bezüglich der Wärme- und Trittschalldämmung bodenseitig mit einer Höhenausgleichseinheit verbunden oder verstellbar gekuppelt ist.

Aufgrund dieser Ausgestaltung des Dämmsystems wird unter Einhaltung aller bestehenden Dämmvorschriften einerseits der für die eigentliche Rohrdämmung erforderliche Dämmstoffverbrauch minimiert und andererseits eine formschlüssige Integration der Rohrleitungen in den Wärme- und Trittschalldämmungsaufbau gewährleistet, die Ausgleichsschüttungen überflüssig macht und ein Aufbringen des Estrichs auf eine im wesentlichen durchgehend ebene Auflagefläche ermöglicht.

Zweckmäßigerweise besteht die Höhenausgleichseinheit aus einem im Querschnitt rechteckigen Hohlkörper, der sich über die Länge des Aufbaus oder in Form von Einzelabschnitten jeweils über Teilbereiche der Länge des Aufbaus erstreckt. Dieser Hohlkörper oder diese Hohlkörperabschnitte führen einerseits dazu, daß bodenseitig eine Luftschicht als zusätzliche Dämmung gegenüber der Rohbetondecke genutzt werden kann, und daß andererseits ein Aufnahmeraum zur Durchführung elektrischer Leitungen und dergleichen geschaffen wird.

Wird als Hohlkörper ein zweiteiliger Kunststoffkanal verwendet, so ergibt sich der Vorteil, daß dessen U-förmiges Bodenteil an der Rohbetondecke befestigt werden kann und dann über eine einfache Schnapp-Rast-Verbindung eine Koppelung mit dem an der Hülse befestigten, insbesondere verklebten Deckelteil möglich ist.

Nach einer weiteren besonders zweckmäßigen Ausgestaltung der Erfindung besteht die Höhenausgleichseinheit aus einem U-förmigen Bodenteil mit flexiblen Seitenwänden, wobei an den Innenseiten dieser Seitenwände Rastelemente zur höhenverstellbaren Koppelung mit der zur Rohrdämmung vorgesehenen Hülse vorgesehen sind. Mit diesem U-förmigen Bodenteil kann sowohl eine Dämmhülse mit asymmetrischem Dämmungsaufbau als auch eine Dämmhülse mit symmetrischem Dämmungsaufbau gekoppelt werden, wobei wiederum der Zwischenraum zwischen Dämmhülse und Rohbetondecke, der sich im Zusammenhang mit der Höheneinstellung ergibt, ein wärmedämmendes Luftpolster bildet.

In all den geschilderten Ausführungsformen ist sichergestellt, daß aufgrund der ebenen Seitenwände ein lückenloser und dämmtechnisch optimaler Anschluß der Wärme- und Trittschalldämmung gewährleistet werden kann.

Weitere vorteilhafte Ausgestaltungen der Erfindung sind in Unteransprüchen angegeben.

Ausführungsbeispiele der Erfindung werden nachfolgend unter Bezugnahme auf die Zeichnung erläutert; in der Zeichnung zeigt:
- Figur 1: einen Fußbodenaufbau mit einem integrierten Dämmsystem nach der Erfindung, und
- Figur 2: eine Variante des Aufbaus nach Figur 1.

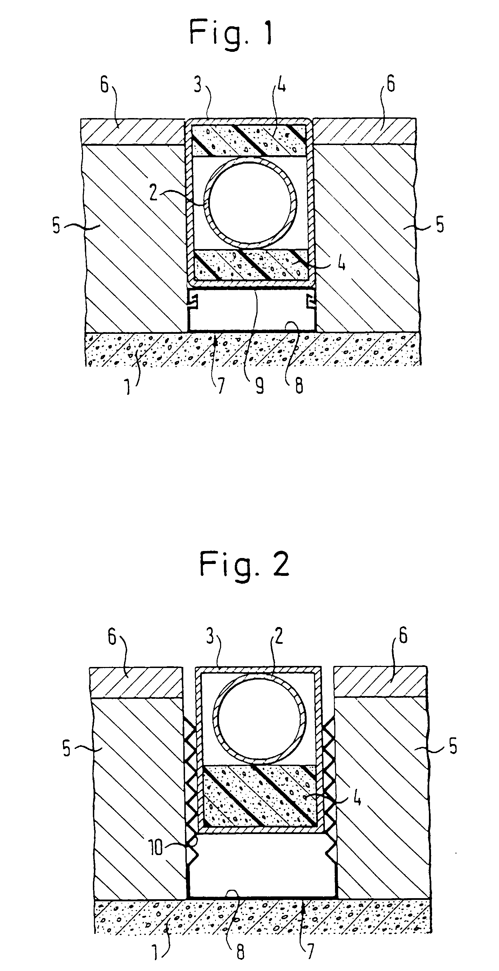

Figur 1 zeigt eine Rohbetondecke 1, auf der in üblicher Weise eine Wärmedämmung 5 und eine Trittschalldämmung 6 angeordnet sind, auf die dann der Estrich aufgebracht wird.

In diese Wärme- und Trittschalldämmung 5, 6 ist eine Warmwasser führende Rohrleitung 2 integriert, die zur Gewährleistung einer vorschriftsmäßigen Dämmung in einer Dämmhülse angeordnet ist. Diese Dämmhülse besteht aus einer Hülle 3 sowie innerhalb dieser Hülle 3 angebrachter und insbesondere mit der Hülle 3 verklebter, beidseitig des Rohres 2 gelegener Dämmstoffschichten 4, die streifenförmig ausgebildet und im Querschnitt etwa rechteckig sind. Die Gesamtstruktur dieser Wärmedämmung des Rohres 2 ist im Querschnitt wiederum etwa rechteckförmig und besitzt demgemäß ebene seitliche Anschlußflächen für die Wärme- und Trittschalldämmung 5, 6, so daß die Wärme- und Trittschalldämmung seitlich auch die Funktion der Rohrdämmung übernehmen kann, was insbesondere aufgrund der lückenfreien Anschlußmöglichkeit erreicht wird.

Um zu gewährleisten, daß trotz der Integration von Rohrleitungen in die Wärme- und Trittschalldämmung eine ebene Oberfläche der Wärme- und Trittschalldämmung erzielt wird und damit ohne Ausgleichsschüttungen unmittelbar der Estrich aufgebracht werden kann, ist die Rohrdämmung mit einer Höhenausgleichseinheit versehen, die im Falle des Ausführungsbeispiels nach Figur 1 aus einem zweiteiligen Kunststoffkanal besteht, dessen Höhe so gewählt ist, daß die Gesamthöhe der Dämmeinheit der Gesamthöhe der Wärme- und Trittschalldämmung entspricht.

Die Höhenausgleichseinheit 7 besteht dabei aus einem Bodenteil 8, das gegebenenfalls direkt auf der Rohbetondecke 1 befestigt werden kann, und einem Deckelteil 9, das mit der Hülle 3 verbunden, insbesondere verklebt ist. Durch einen einfachen Schnapp-Rast-Vorgang können Bodenteil 8 und Deckelteil 9 miteinander verbunden werden, worauf die Rohrdämmung und auch das sich in der Dämmung befindende Rohr 2 eindeutig positioniert sind und damit auch ein exaktes Anpassen der jeweils anschließenden Wärme- und Trittschalldämmung begünstigt wird.

Die Höhenausgleichseinheit 7 kann gleichzeitig als Kanal zur Führung von elektrischen Leitungen und dergleichen verwendet werden, aber sie erfüllt stets zusätzlich auch noch Dämmfunktion, da sich das vorhandene Luftpolster stets unter dämmtechnischen Gesichtspunkten vorteilhaft auswirkt.

Figur 2 zeigt eine Ausführungsvariante, die vor allem den Vorteil besitzt, daß sie die Verwendung von symmetrisch und auch unsymmetrisch ausgebildeten Rohrdämmungen in gleicher Weise ermöglicht, und zwar selbst dann, wenn an der eigentlichen Rohrdämmung keine zur Höhenausgleichseinheit gehörenden Zusatzelemente vorhanden sind.

Bei dieser Ausführungsvariante ist ein U-förmiges Bodenteil 8, das an der Rohbetondecke 1 befestigt werden kann, vorgesehen, welches flexible Seitenwände aufweist, an deren Innenseite Rastelemente 10 vorhanden sind. Die Seitenwände können leicht nach innen vorgespannt ausgebildet sein. In dieses U-förmige Bodenteil 8 kann die Dämmhülse 3 mit dem sich darin befindenden Rohr 2 von oben her eingeführt bzw. eingedrückt werden, und zwar in einem solchen Ausmaß, daß sich genau die Aufbauhöhe ergibt, die der Höhe von Wärme- und Trittschalldämmung 5, 6 entspricht. Aufgrund der flexiblen Kupplung zwischen Bodenteil 8 und Rohrdämmung läßt sich auch nachträglich noch eine Einstellungskorrektur zur Erzielung einer ebenen Gesamtoberfläche vornehmen. Im gezeigten Ausführungsbeispiel ist eine asymmetrische Rohrdämmung vorgesehen, bei der eine Dämmstoffschicht 4 nur zwischen dem Rohr 2 und der Rohbetondecke 1 verwendet wird.

Es ist nicht notwendigerweise erforderlich, daß an der Außenseite der Hülle 3 Gegenelemente für die Rastelemente 10 vorgesehen sind, aber grundsätzlich können solche Gegenelemente auch verwendet werden, die dann beispielsweise mit der Außenseite der Hülle 3 verklebt sind.

Auch bei dieser Ausführungsvariante ist ein lückenloser Anschluß der Wärme- und Trittschalldämmung 5, 6 an den Seitenflächen der Wärmedämmung bzw. der Höhenausgleichseinheit 7 gewährleistet, und außerdem steht auch hier das sich vorteilhaft auswirkende Luftpolster zwischen Rohbetondecke 1 und Dämmstoffschicht 4 zur Verfügung. Schließlich kann auch der Luftpolsterraum zur Aufnahme von Kabeln und dergleichen zusätzlich genutzt werden.

Die Materialen für die Rohrdämmung und auch für die Höhenausgleichseinheit können vorzugsweise so gewählt werden, daß die gesamte Anordnung in sich flexibel ist und nach Art eines Schlauches aufgerollt werden kann.

### Bezugszeichenliste

1 Rohbetondecke
2 Rohr
3 Hülle
4 Dämmstoffschicht
5 Wärmedämmung
6 Trittschalldämmung
7 Höhenausgleichseinheit
8 Bodenteil
9 Deckelteil
10 Rastelemente

## Patentansprüche

1. Dämmsystem für auf Rohbetondecken in einer Wärme- und Trittschalldämmung zu verlegende, insbesondere Warmwasser führende Rohrleitungen mit einer die Rohrleitung (2) umschließenden flexiblen Hülle (3) und zumindest einer zwischen Rohrleitung (2) und Hülle (3) angeordneten, im Querschnitt zumindest im wesentlichen rechteckförmigen Dämmstoffschicht (4) aus flexiblem Material, insbesondere Schaumstoff, wobei die in ihrer Breite etwa dem Rohraußendurchmesser entsprechende Dämmstoffschicht (4) bezogen auf die Rohbetondecke (1) unterhalb des Rohres (2) gelegen ist und der aus Hülle (3), Dämmstoffschicht (4) und Rohr (2) bestehende Aufbau im wesentlichen ebene Anschlußflächen aufweist, an die im verlegten Zustand die Wärme- und Trittschalldämmung (5, 6) seitlich angrenzt,
dadurch **gekennzeichnet**,
daß der aus Hülle (3), Dämmstoffschicht (4) und Rohr (2) bestehende Aufbau zum Höhenausgleich bezüglich der Wärme- und Trittschalldämmung (5, 6) bodenseitig mit einer Höhenausgleichseinheit (7) verbunden oder verstellbar gekuppelt ist.

2. Dämmsystem nach Anspruch 1,
dadurch **gekennzeichnet**,
daß unter Ausbildung eines mittensymmetrischen Aufbaus beiderseits des Rohres (2) eine Dämmstoffschicht (4) vorgesehen ist.

3. Dämmsystem nach Anspruch 1 oder 2,
dadurch **gekennzeichnet**,
daß an der Innenseite der aus Folienmaterial bestehenden Hülle (3) eine im Vergleich zur Dämmstoffschicht (4) nur eine geringe Dicke aufweisende Schaumstoffschicht und an der Außenseite des Folienmaterials eine aus einer Gitter-, Netz- oder Gewebestruktur bestehende Verstärkung vorgesehen ist.

4. Dämmsystem nach einem oder mehreren der vorhergehenden Ansprüche,
dadurch **gekennzeichnet,**
daß die Höhenausgleichseinheit (7) aus einem im Querschnitt rechteckigen Hohlkörper besteht, der sich über die Länge des Aufbaus oder in Form von Einzelabschnitten jeweils nur über Teilbereiche der Länge des Aufbaus erstreckt.

5. Dämmsystem nach Anspruch 4,
dadurch **gekennzeichnet**,
daß der Hohlkörper aus einem zweiteiligen Kunststoffkanal besteht, dessen zur Befestigung an der Rohbetonfläche (1) geeignetes U-förmiges Bodenteil (8) über eine Schnapp-Rast-Verbindung mit der an der Hülle (3) befestigten Deckelteil (9) kuppelbar ist.

6. Dämmsystem nach einem oder mehreren der Ansprüche 1 bis 3,
dadurch **gekennzeichnet**,
daß die Höhenausgleichseinheit (7) aus einem U-förmigen Bodenteil (8) mit flexiblen Seitenwänden (9) zur Aufnahme des von Hülle (3), Dämmstoffschicht (4) und Rohr (2) gebildeten Aufbaus besteht, und daß an den Innenseiten der Seitenwände (9) Rastelemente (10) zur höhenverstellbaren Koppelung mit dem Aufbau vorgesehen sind.

7. Dämmsystem nach Anspruch 6,
dadurch **gekennzeichnet**,
daß an den Außenseiten der Hülle (3) mit den Rastelementen (10) zusammenwirkende Gegenelemente vorgesehen sind.

8. Dämmsystem nach einem oder mehreren der vorhergehenden Ansprüche,
dadurch **gekennzeichnet**,
daß auch die Höhenausgleichseinheit aus einem flexiblen, ein Aufrollen ermöglichenden Material besteht.

9. Dämmsystem nach einem oder mehreren der vorhergehenden Ansprüche,
dadurch **gekennzeichnet**,
daß zumindest der aus Hülle und Dämmstoffschicht bzw. Dämmstoffschichten bestehende Aufbau aus einer durch Extrusion gebildeten Einheit besteht.

## Claims

1. Insulating system for pipe conduits, in particular pipe conduits which conduct warm water and which are to be laid on rough-cast concrete floors in a thermal and footstep noise insulation, comprising a flexible sleeve (3) which surrounds the pipe conduit (2) and at least one insulating material layer (4) of flexible material, in particular foam material, which is of at least substantially rectangular cross-section and is arranged between the pipe conduit (2) and the sleeve (3), wherein the insulating material (4), which corresponds in its width approximately to the tube outer diameter, is disposed in relation to the rough-cast concrete floor (1) beneath the pipe conduit (2) and the assembly consisting of the sleeve (3), insulating material layer (4) and pipe (2), has substantially planar boundary surfaces which are bounded at the side in the laid state by the thermal and footstep sound insulation (5, 6), characterised in that the assembly, consisting of the sleeve (3), insulating material layer (4) and pipe (2), is connected or adjustably coupled at the floor side with a height compensation unit (7) for height equalisation relative to the thermal and footstep sound insulation (5, 6).

2. Insulating system in accordance with claim 1, characterised in that an insulating material layer (4) is provided on both sides of the pipe (2) while forming a centrally symmetrical assembly.

3. Insulating system in accordance with claim 1 or claim 2, characterised in that a foam material layer having only a small thickness in comparison to the insulating material layer (4) is provided at the inner side of the sleeve (3) consisting of foil material, and in that a reinforcement consisting of a grid, net or woven structure is provided at the outer side of the foil material.

4. Insulating system in accordance with one or more of the preceding claims, characterised in that the height compensation unit (7) comprises a hollow body which is rectangular in cross-section and which extends over the length of the assembly, or in the form of individual sections in each case only over partial regions of the length of the assembly.

5. Insulating system in accordance with claim 4, characterised in that the hollow body consists of a two-part plastic channel, the U-shaped base part (8) of which, which is suitable for fastening to the rough-cast concrete floor, can be coupled via a snap-latch connection to the cover part (9) which is secured to the sleeve (3).

6. Insulating system in accordance with one or more of the claims 1 to 3, characterised in that the height compensation unit (7) consists of a U-shaped base part (8) with flexible side walls (9) for receiving the assembly formed by the sleeve (3), insulating material layer (4) and pipe (2); and in that latch elements (10) for the vertically adjustable coupling to the assembly are provided at the inner sides of the side walls (9).

7. Insulating system in accordance with claim 6, characterised in that counterelements which cooperate with the latch elements (10) at the outer sides of the sleeve (3) are provided.

8. Insulating system in accordance with one or more of the preceding claims, characterised in that the height compensation unit also consists of a flexible material which enables it to be rolled up.

9. Insulating system in accordance with one or more of the preceding claims, characterised in that at least the assembly consisting of the sleeve and the insulating material layer, or insulating material layers, consists of a unit which is formed by extrusion.

## Revendications

1. Système isolant pour conduites à poser sur des revêtements en béton brut dans une isolation thermique et une isolation contre le bruit des pas, en particulier de conduites véhiculant de l'eau chaude, avec une gaine (3) flexible enveloppant la conduite (2) et au moins une couche de matériau isolant (4) disposée entre la conduite (2) et la gaine (3), au moins sensiblement rectangulaire en section, à base de matériau flexible, en particulier de la mousse, la couche de matériau isolant (4) de largeur correspondant environ au diamètre extérieur du tube étant posée au-dessous du tuyau (2) par rapport au revêtement en béton brut (1) et la structure comprenant la gaine (3), la couche de matériau isolant (4) et le tuyau (2) présentant des faces de raccordement sensiblement planes, auxquelles touchent sur le côté, à l'état posé, l'isolation thermique et l'isolation contre le bruit des pas (5, 6), caractérisé en ce que la structure comprenant la gaine (3), la couche de matériau isolant (4) et le tuyau (2) est reliée ou peut être couplée de façon réglable, sur le fond, avec une unité d'équilibrage en hauteur (7) pour la compensation en hauteur par rapport à l'isolation thermique et l'isolation contre le bruit des pas (5, 6).

2. Système isolant selon la revendication 1, caractérisé en ce qu'une couche de matériau isolant (4) est prévue en formant une structure symétrique par rapport au milieu de part et d'autre du tuyau (2).

3. Système isolant selon la revendication 1 ou 2, caractérisé en ce qu'il est prévu sur le côté interne de la gaine (3) à base de matériau en feuille une couche de mousse présentant seulement une faible épaisseur par rapport à la couche de matériau isolant (4) et sur le côté externe du matériau en feuille un renforcement comprenant une structure réticulaire, en réseau ou en tissu.

4. Système isolant selon l'une quelconque ou plusieurs des revendications précédentes, caractérisé en ce que l'unité d'équilibrage en hauteur (7) comprend un corps creux de section rectangulaire qui s'étend le long de la structure ou sous la forme de segments individuels respectivement seulement sur des sections partielles de la longueur de la structure.

5. Système isolant selon la revendication 4, caractérisé en ce que le corps creux se compose d'un canal plastique en deux parties, dont la partie du fond (8) en forme de U et appropriée pour la fixation sur la surface de béton brut (1) peut être accouplée par une liaison à encliquetage et décliquetage avec la partie formant couvercle (9) fixée sur la gaine (3).

6. Système isolant selon l'une quelconque ou plusieurs des revendications 1 à 3, caractérisé en ce que l'unité d'équilibrage en hauteur (7) comprend une partie de fond (8) en forme de U avec parois latérales (9) flexibles pour recevoir la structure formée de la gaine (3), de la couche de matériau isolant (4) et du tuyau (2), et en ce que sur les côtés internes des parois latérales (9) sont prévus des éléments d'encliquetage (10) pour l'accouplement réglable en hauteur avec la structure.

7. Système isolant selon la revendication 6, caractérisé en ce que sur les côtés externes de la gaine (3) sont prévus des contre-éléments agissant conjointement avec les éléments d'encliquetage (10).

8. Système isolant selon l'une quelconque ou plusieurs des revendications précédentes, caractérisé en ce que l'unité d'équilibrage en hauteur se compose d'un matériau flexible qui permet un enroulement.

9. Système isolant selon l'une quelconque ou plusieurs des revendications précédentes, caractérisé en ce qu'au moins la structure comprenant la gaine et la couche de matériau isolant ou les couches de matériau isolant se compose d'une unité formée par extrusion.
